# FASCICULE DE BREVET EUROPEEN

(11) **EP 3 475 532 B1**
(45) Date de publication et mention de la délivrance du brevet: **15.04.2020**
(21) Numéro de dépôt: 17745402.2
(22) Date de dépôt: 27.06.2017
(51) Int. Cl.: F01D 5/14, F04D 29/68, B64C 21/10, F01D 9/04, F04D 29/54, F15D 1/00, F15D 1/12

(54) **PIÈCE ET PROCÉDÉ DE FABRICATION D'UNE PIÈCE A TRAÎNÉE RÉDUITE PAR RIBLETS ÉVOLUTIFS**
TEIL UND VERFAHREN ZUR HERSTELLUNG EINES TEILS MIT REDUZIERTEM WIDERSTAND DURCH NICHT KONSTANTE RIBLETS
PART AND METHOD FOR PRODUCING A PART HAVING REDUCED DRAG BY NON-CONSTANT RIBLETS

(30) Priorité: 28.06.2016 FR 1656025
(43) Date de publication de la demande: 01.05.2019
(73) Titulaire: Safran Aircraft Engines, 75015 Paris (FR)
(72) Inventeur: RIERA, William, Henri, Joseph, 77550 Moissy-Crayamel (FR); TALBOTEC, Jérôme, Jean-Yves, 77550 Moissy-Crayamel (FR); MARTY, Julien, Roger, Marcel, 77550 Moissy-Crayamel (FR)
(74) Mandataire: Regimbeau
(86) Numéro de dépôt international: PCT/FR2017/051721
(87) Numéro de publication internationale: WO 2018/002514

(56) Documents cités:
- FR-A1- 2 947 313
- US-A1- 2011 262 705

## Description

### Domaine de l'invention

La présente invention concerne une pièce d'une turbomachine pour un aéronef qui est adaptée pour réduire la trainée de ladite pièce créée par le passage d'un flux d'air le long de ladite pièce.

Plus particulièrement, l'invention concerne une aube de la turbomachine comprenant des riblets, ou bien une paroi de la turbomachine délimitant une veine d'écoulement d'air à l'intérieur de ladite turbomachine qui comprend des riblets.

### Etat de l'art

Afin de réduire la trainée des aubes d'un redresseur d'un flux secondaire d'une turbomachine pour aéronef, il est connu de former un réseau de riblets sur l'intrados et/ou l'extrados des aubes dudit redresseur du flux secondaire.

Les riblets sont des nervures s'étendant selon l'axe de la turbomachine sur l'intrados et l'extrados des aubes, de sorte que lesdites nervures sont orientées parallèlement à la direction de l'écoulement d'air.

Les riblets peuvent posséder des formes diverses. Les riblets peuvent par exemple avoir une forme triangulaire, ou une forme carrée, selon une section normale à l'axe de la turbomachine.

Les riblets possèdent généralement une hauteur et une largeur de l'ordre de 1 à 100 µm. De plus, deux riblets voisins peuvent être espacés d'une distance allant de 0 à 50 µm.

Selon une première solution connue, les riblets possèdent une forme qui est constante le long de l'intrados et de l'extrados. La forme d'un riblet comprend également la largeur et la hauteur dudit riblet.

Cette première solution connue offre l'avantage de faciliter la fabrication des riblets sur les aubes.

Du fait de la forme des profils d'aubes, la vitesse d'écoulement du flux d'air le long de l'extrados et de l'intrados des aubes n'est pas constante.

Or, pour une forme donnée, la réduction de la trainée par des riblets dépend de la vitesse de l'écoulement du flux d'air circulant le long de la paroi sur laquelle lesdits riblets sont formés.

Autrement dit, certaines formes de riblets permettent de réduire efficacement la trainée lorsque la vitesse d'écoulement du flux d'air est faible, tandis que d'autres formes de riblets permettent de réduire efficacement la trainée lorsque la vitesse d'écoulement du flux d'air est élevée.

Ainsi, une telle première solution ne permet pas de réduire efficacement la trainée des aubes.

Afin de tenir compte de la variation de la vitesse de l'écoulement du flux d'air le long de l'extrados et de l'intrados, une deuxième solution connue consiste à séparer l'intrados et/ou l'extrados en au moins deux zones, une première zone étant située à proximité du bord d'attaque de l'aube tandis qu'une deuxième zone est située à proximité du bord de fuite, et à former des riblets de forme différentes sur la première zone et la deuxième zone. La forme des riblets sur la première zone et la deuxième zone est constante.

Une zone de transition est située entre la première et la deuxième zone afin de permettre à la forme des riblets d'évoluer entre la forme des riblets sur la première zone et la forme des riblets sur la deuxième zone.

Une telle deuxième solution offre l'avantage de pouvoir adapter la forme des riblets le long de la paroi des aubes suivant la vitesse d'écoulement du flux d'air.

Toutefois, à cause de la variation de la forme des riblets, la deuxième solution connue complexifie fortement la fabrication des riblets. La fabrication est notamment rendue plus complexe à cause de la zone de transition sur laquelle la forme des riblets évolue.

On connait également les documents US2011262705 et FR2947313. Toutefois les solutions décrites dans ces documents ne sont pas satisfaisantes.

Ainsi, aucune des solutions connues ne permet à la fois de réduire efficacement la trainée, et à la fois de simplifier le procédé de fabrication des riblets.

### Présentation générale de l'invention

Un but de l'invention est de proposer une solution permettant à la fois de réduire de manière efficace la trainée créée par la circulation d'un flux d'air contre une paroi en adaptant localement la forme des riblets formés sur ladite paroi à la vitesse d'écoulement du flux d'air, et à la fois de disposer d'un procédé de fabrication de riblets sur ladite paroi qui est simple à mettre en œuvre.

A cet effet, il est prévu une pièce d'une turbomachine pour un aéronef selon la revendication 1, la pièce comprenant une paroi qui comprend une première zone, une deuxième zone, et une zone de transition située entre la première zone et la deuxième zone,
un réseau de riblets étant formé sur la première zone, la deuxième zone, et ainsi que sur la zone de transition; les riblets étant orientés parallèlement à une direction principale d'un écoulement d'air le long de la paroi;
les riblets comprenant un sommet, une hauteur, une largeur, et un écartement qui correspond à la distance entre les sommets de riblets voisins ;
la hauteur, la largeur, et l'écartement des riblets formés sur la première zone étant constants sur la première zone ;
la hauteur, la largeur, et l'écartement des riblets formés sur la deuxième zone étant constants sur la deuxième zone ;
la hauteur, la largeur, et l'écartement des riblets formés sur la zone de transition évoluant le long de ladite zone de transition de sorte à passer de la hauteur, la largeur, et l'écartement des riblets formés sur la première zone à une première extrémité de la zone de transition, à la hauteur, la largeur, et l'écartement des riblets formés sur la deuxième zone à une deuxième extrémité de la zone de transition ;
caractérisé en ce que la zone de transition comprend une portion centrale située entre la première et la seconde extrémité sur laquelle les riblets comprennent d'une part la hauteur et la largeur qui sont respectivement égales à la hauteur et la largeur des riblets de la première zone, et d'autre part un écartement égal à l'écartement des riblets de la deuxième zone.

Une telle pièce possède une trainée réduite grâce aux riblets.

La pièce selon l'invention est avantageusement complétée par les caractéristiques suivantes, prises seules ou en une quelconque de leurs combinaisons techniquement possibles :
- le rapport entre l'écartement et la hauteur des riblets formés sur la première zone étant égal au rapport entre l'écartement et la hauteur des riblets formés sur la deuxième zone ;
- la pièce est une aube de turbomachine pour aéronef, l'aube comprenant un intrados et un extrados, le réseau de riblets étant situé sur l'intrados et/ou l'extrados de ladite aube ;
- l'aube comprend un bord d'attaque et un bord de fuite, la première zone s'étendant à partir du bord d'attaque et la deuxième zone s'étendant à partir du bord de fuite, la hauteur, la largeur et l'écartement des riblets de la deuxième zone étant respectivement supérieurs à la hauteur, la largeur et l'écartement des riblets de la première zone ;
- l'aube comprend un axe radial et un axe perpendiculaire à l'axe radial, les riblets formés sur la première zone possédant un angle d'inclinaison par rapport à l'axe perpendiculaire à l'axe radial qui est constant sur la première zone, les riblets formés sur la deuxième zone possédant un angle d'inclinaison par rapport à l'axe perpendiculaire à l'axe radial qui est supérieur ou égal à l'angle d'inclinaison des riblets de la première zone et qui est constant sur la deuxième zone, les riblets formés sur la zone de transition possédant un angle d'inclinaison par rapport à l'axe perpendiculaire à l'axe radial qui évolue le long de ladite zone de transition entre l'angle d'inclinaison des riblets de la première zone à la première extrémité de la zone de transition, et l'angle d'inclinaison des riblets de la deuxième zone à la deuxième extrémité de la zone de transition ;
- l'angle d'inclinaison des riblets de la première zone est compris entre 0° et 15°, et l'angle d'inclinaison des riblets de la deuxième zone est compris entre 0° et 30°
- la pièce est une aube de redresseur pour un redresseur secondaire d'une turbomachine pour un aéronef.

L'invention concerne également une turbomachine pour aéronef décrit dans la revendication 8, la turbomachine comprenant une pièce selon l'une quelconque des caractéristiques précédentes.

L'invention concerne également une turbomachine pour aéronef comprenant une pièce selon la caractéristique principale, dans laquelle la turbomachine comprend une veine primaire, une veine secondaire, une soufflante, et un redresseur secondaire situé dans la veine secondaire, la pièce étant un bec de séparation entre la veine primaire et la veine secondaire qui est situé entre la soufflante et le redresseur secondaire, les riblets étant situés sur une portion du bec de séparation formant une paroi interne de la veine secondaire.

L'invention concerne également un procédé de fabrication d'une pièce de turbomachine tel que décrit dans la revendication 10, ledit procédé comprenant les étapes suivantes :
- former un réseau de riblets sur une première zone de la paroi, les riblets comprenant un sommet, une hauteur, une largeur, et un écartement qui correspond à la distance entre les sommets de riblets voisins, les riblets étant orientés parallèlement à une direction principale d'un écoulement ir le long de la paroi; la hauteur, la largeur, et l'écartement des riblets de la première zone étant constants sur toute la première zone ;
- former un réseau de riblets sur une deuxième zone de la paroi, les riblets comprenant un sommet, une hauteur, une largeur, et un écartement qui correspond à la distance entre les sommets de riblets voisins, les riblets étant orientés parallèlement à une direction principale d'un écoulement d'air le long de la paroi; la hauteur, la largeur, et l'écartement des riblets de la deuxième zone étant constants sur toute la deuxième zone ;
- former un réseau de riblets sur une zone de transition située entre la première zone et la deuxième zone, les riblets comprenant un sommet, une hauteur, une largeur, et un écartement correspondant à la distance entre les sommets de riblets voisins, les riblets étant orientés parallèlement à une direction principale d'un écoulement d'air le long de la paroi; la hauteur, la largeur, et l'écartement des riblets de la zone de transition évoluant le long de ladite zone de transition de sorte à passer de la hauteur, la largeur, et l'écartement des riblets de la première zone à une première extrémité de la zone de transition, à la hauteur, la largeur, et l'écartement des riblets de la deuxième zone à une deuxième extrémité de la zone de transition, la zone de transition comprenant une portion centrale située entre la première et la seconde extrémité sur laquelle les riblets comprennent d'une part la hauteur et la largeur qui sont respectivement égales à la hauteur et la largeur des riblets de la première zone, et d'autre part un écartement égal à l'écartement des riblets de la deuxième zone.

Selon un aspect indépendant, l'invention concerne également une aube d'une turbomachine, par exemple une aube d'un redresseur secondaire, qui comprend un intrados, un extrados, un bord d'attaque, un bord de fuite, un sommet, un pied, un axe radial et un axe perpendiculaire à l'axe radial, des riblets étant formés sur une première zone, une deuxième zone et une zone de transition de l'intrados et/ou l'extrados, la zone de transition étant située entre la première zone et la deuxième zone, les riblets formés sur la première zone possédant un angle d'inclinaison par rapport à l'axe perpendiculaire à l'axe radial qui est constant sur la première zone, les riblets formés sur la deuxième zone possédant un angle d'inclinaison par rapport à l'axe perpendiculaire à l'axe radial qui est supérieur à l'angle d'inclinaison des riblets de la première zone et qui est constant sur la deuxième zone, les riblets formés sur la zone de transition possédant un angle d'inclinaison par rapport à l'axe perpendiculaire à l'axe radial qui évolue le long de ladite zone de transition entre l'angle d'inclinaison des riblets de la première zone à une première extrémité de la zone de transition, et l'angle d'inclinaison des riblets de la deuxième zone à une deuxième extrémité de la zone de transition.

### Présentation des figures

D'autres caractéristiques, buts et avantages de l'invention apparaitront à la lecture de la description ci-après de différents modes de réalisation représentés dans les dessins suivants :
- la figure 1 représente une partie d'une demi-vue d'une turbomachine ;
- la figure 2a représente une vue en perspective d'une aube de redresseur ;
- la figure 2b représente une vue en coupe de l'aube de redresseur illustrée sur la figure 2a ;
- la figure 3a représente une vue de face d'une portion de l'extrados d'une aube de redresseur sur laquelle des riblets sont formés, seul les sommets des riblets étant représentés sur la figure 3a ;
- la figure 3b représente une vue en coupe de la figure 3a selon l'axe A-A situé au niveau d'une première zone de l'extrados ;
- la figure 3c représente une vue en coupe de la figure 3a selon l'axe B-B situé au niveau d'une zone de transition de l'extrados ;
- la figure 3d représente une vue en coupe de la figure 3a selon l'axe C-C situé au niveau de la deuxième zone ;
- la figure 4 représente un diagramme illustrant l'adaptation de la forme des riblets sur la première zone et la deuxième zone de sorte à optimiser la réduction de la trainée le long de l'extrados de l'aube ;
- la figure 5 représente une vue de face de la partie supérieure de l'extrados de l'aube selon une variante dans laquelle l'inclinaison des riblets varie le long dudit extrados, seul les sommets des riblets étant représentés sur la figure 5 ;
- la figure 6 représente une mise en œuvre possible d'un procédé d'atténuation de la trainée d'une pièce selon l'invention.

### Description de l'invention

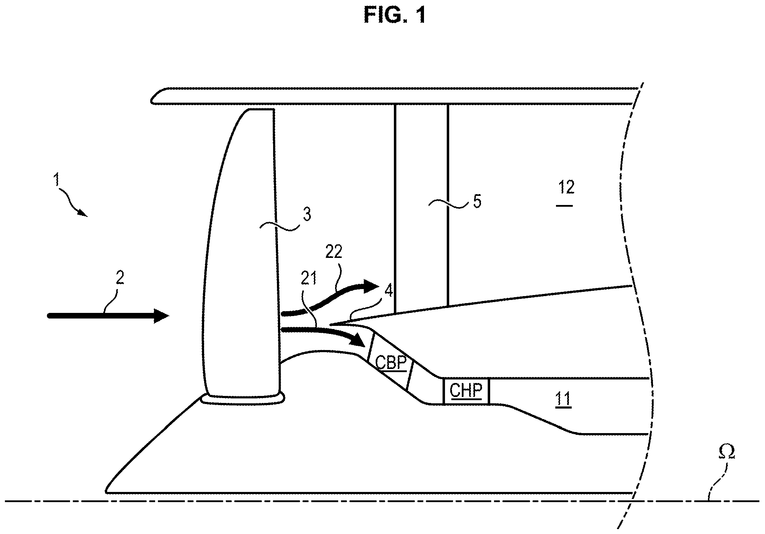

Comme représenté sur la figure 1, une turbomachine 1 double-flux pour aéronef présente une direction principale s'étendant selon un axe Ω longitudinal, et crée deux flux d'air séparés à partir d'un flux d'air 2 admis en entrée de ladite turbomachine 1.

Le flux d'air 2 admis en entrée de la turbomachine 1 est d'abord comprimé par une soufflante 3. En sortie de la soufflante 3, le flux d'air 2 est ensuite séparé en deux flux distincts, un premier flux formant un flux primaire 21 qui circule dans une veine primaire 11 de la turbomachine 1, et un second flux formant un flux secondaire 22 qui circule dans une veine secondaire 12 de ladite turbomachine 1.

La séparation du flux primaire 21 et du flux secondaire 22 est assurée par un bec de séparation 4 qui est disposé en aval de la soufflante 3. Le bec de séparation 4 comprend une première face formant une paroi interne de la veine primaire, et une seconde face formant une paroi interne de la veine secondaire.

Par la suite, le flux primaire 21 est comprimé par un compresseur basse pression CBP et un compresseur haute pression CHP, puis est brûlé avec du carburant dans une chambre de combustion.

Le flux secondaire 22 est quant à lui dirigé vers un redresseur secondaire 5 situé dans la veine secondaire 12 afin de redresser ledit flux secondaire 22 par rapport l'axe Ω de la turbomachine 1 et de comprimer ledit flux secondaire 22.

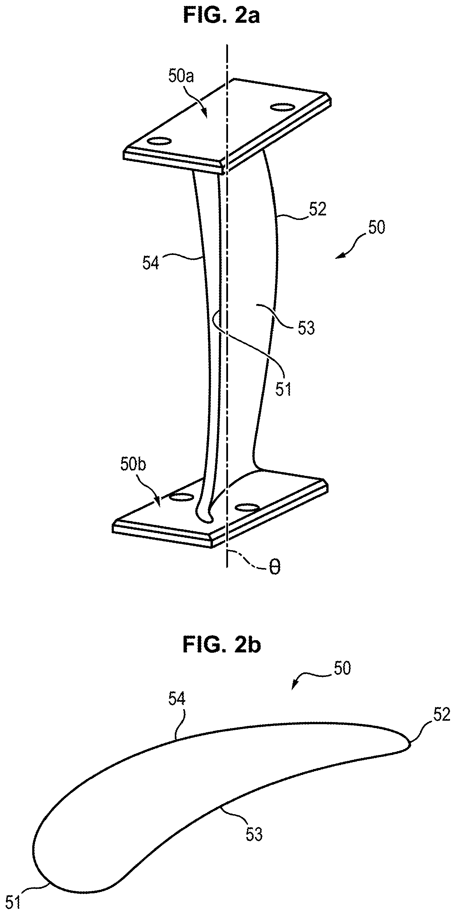

Comme représenté sur les figures 2a et 2b, le redresseur secondaire 5 est un disque formé d'une pluralité d'aubes de redresseur 50 qui est centré sur l'axe Ω de la turbomachine 1.

Chaque aube de redresseur 50 comprend un bord d'attaque 51 par lequel le flux secondaire 22 vient au contact de l'aube de redresseur 50 lors du fonctionnement de la turbomachine 1, et un bord de fuite 52 par lequel le flux d'air secondaire 22 s'échappe de l'aube de redresseur 50.

L'aube de redresseur 50 comprend un intrados 53 et un extrados 54 qui forment chacun une paroi s'étendant entre le bord d'attaque 51 et le bord de fuite 52 de l'aube de redresseur 50.

L'aube de redresseur 50 comprend également un sommet 50a et un pied 50b. Le sommet 50a forme l'extrémité de l'aube 50 qui est située radialement vers l'extérieur par rapport à l'axe Ω lorsque ladite aube 50 est montée dans la turbomachine 1. Le pied 50b forme l'extrémité de l'aube 50 qui est située radialement vers l'intérieur par rapport à l'axe Ω lorsque ladite aube 50 est montée dans la turbomachine 1. Le sommet 50a est plat et est parallèle à l'axe Ω de la turbomachine.

L'aube de redresseur 50 comprend en outre un axe radial θ qui est perpendiculaire à l'axe Ω de la turbomachine 1 et à l'axe du redresseur (qui est confondu avec l'axe Ω de la turbomachine 1). L'axe radial θ forme un axe principal d'élongation de l'aube de redresseur 50 et relie le sommet 50a au pied 50b.

Lors du fonctionnement de la turbomachine 1, le flux secondaire 22 arrive au contact de l'aube de redresseur 50 par le bord d'attaque 51. Le flux secondaire 22 contourne l'aube de redresseur 50 en se divisant en deux, une partie du flux secondaire 22 longeant l'intrados 53, une autre partie du flux secondaire 22 longeant l'extrados 54. Ces deux parties du flux se rejoignent ensuite au bord de fuite 52 de l'aube de redresseur 50 où le flux secondaire 22 est expulsé de l'aube de redresseur 50.

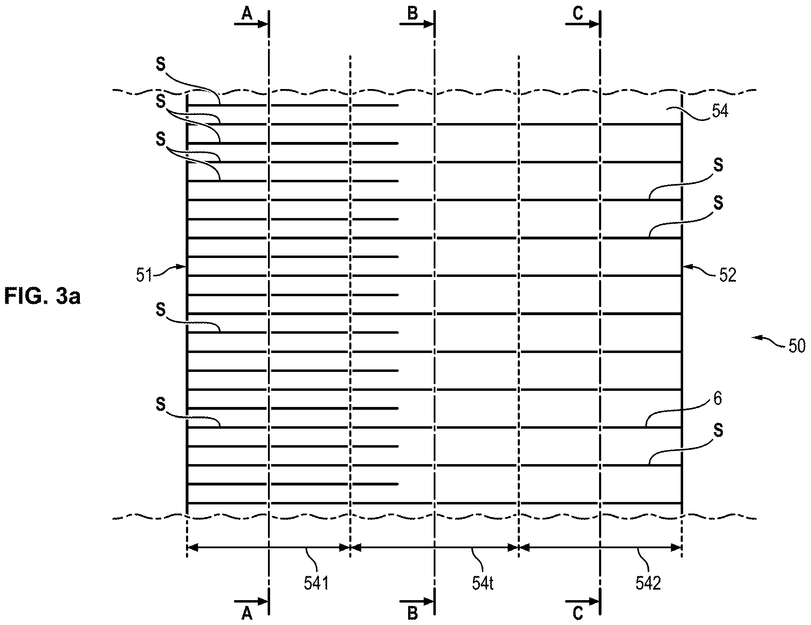

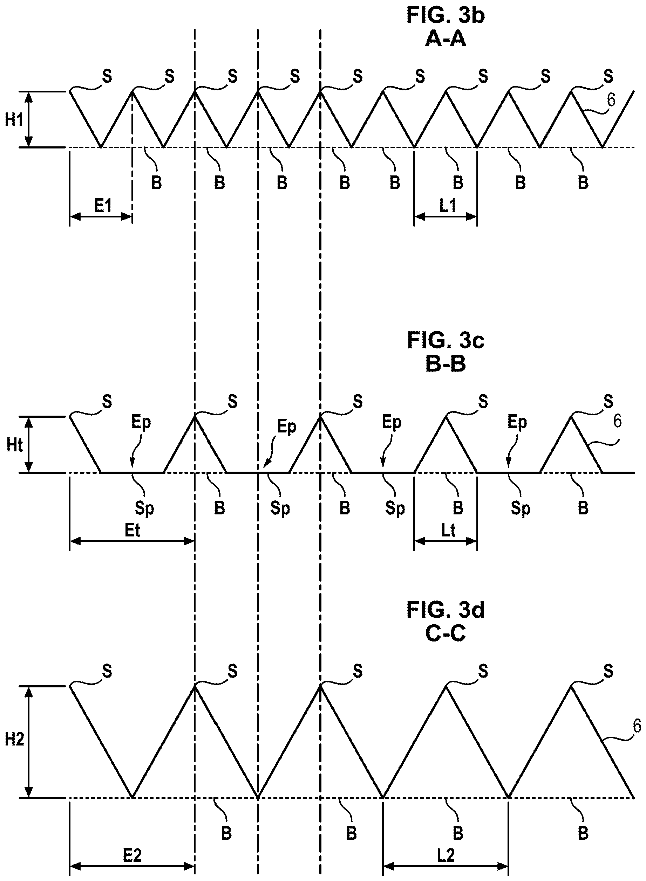

Comme représenté sur les figures 3a, 3b, 3c et 3d, afin de limiter la trainée créée par la circulation du flux secondaire 22 le long de l'extrados 54 de l'aube de redresseur 50, un réseau de riblets 6 est formé sur l'extrados 54 de ladite aube de redresseur 50.

Les riblets 6 sont des nervures qui sont dirigées parallèlement à la direction d'écoulement du flux d'air secondaire 22, et qui sont donc dirigées selon une direction comprenant une composante selon l'axe Ω de la turbomachine 1. Les riblets 6 peuvent être parallèles à l'axe Ω.

Les riblets 6 comprennent un sommet S formant une extrémité supérieure et une base B formant une extrémité inférieure.

Chaque riblet 6 comprend une hauteur correspondant à la distance entre la base B et le sommet S du riblet 6, et une largeur correspondant à la largeur de la base B.

Les riblets 6 sont espacés entre eux selon un écartement correspondant à la distance entre le sommet S d'un riblet 6 et les sommets S des riblets 6 voisins.

L'extrados 54 comprend trois zones comprenant chacune un réseau de riblets 6 de formes différentes. L'extrados 54 comprend ainsi une première zone 541 qui s'étend à partir du bord d'attaque 51 et une deuxième zone 542 qui s'étend à partir du bord de fuite 52. La première zone 541 et la deuxième zone 542 sont séparées par une zone de transition 54t située entre lesdites première et deuxième zones 541 et 542. La zone de transition 54t possède de préférence une longueur qui n'est pas supérieure à 5% de la longueur de la corde de l'aube 50. De plus, frontière entre la première zone 541 et la zone de transition 54t est de préférence située entre 10% et 40% de la corde de l'aube 50 en partant du bord d'attaque 51, et la frontière entre la deuxième zone 542 et la zone de transition 54t est de préférence située entre 15% et 45% de la de la corde en partant du bord d'attaque 51.

La corde d'une aube correspond à une ligne théorique reliant le bord d'attaque au bord de fuite.

Comme illustré sur la figure 3a et la figure 3b, la première zone 541 située au niveau du bord d'attaque 51 comprend des riblets 6 qui possèdent une hauteur H1, un écartement E1, et une largeur L1. L'écartement E1 des riblets 6 de la première zone 541 est égal à la largeur L1, de sorte que les bases B des riblets 6 voisins sont en contact.

La forme des riblets 6 (leur hauteur H1, leur écartement E1, et leur largeur L1) est constante tout le long de la première zone 541 de l'extrados 54.

Comme illustré sur la figure 3a et la figure 3d, la deuxième zone 542 située au niveau du bord de fuite 52 comprend des riblets 6 qui possèdent une hauteur H2, un écartement E2, et une largeur L2. L'écartement E2 des riblets 6 de la deuxième zone 542 est égal à la largeur L2, de sorte que les bases B des riblets 6 voisins sont en contact.

La forme des riblets 6 (leur hauteur H2, leur écartement E2, et leur largeur L2) est constante tout le long de la deuxième zone 542 de l'extrados 54.

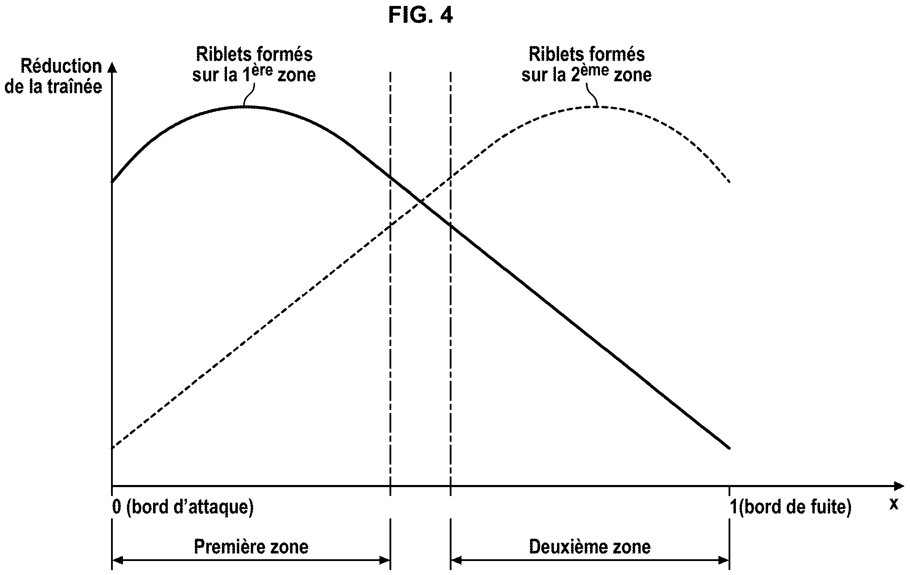

Comme illustré sur la figure 4, la forme des riblets 6 (leur hauteur, leur écartement, et leur largeur) formés sur la première zone 541 et la deuxième zone 542 de l'extrados 54 est adaptée en fonction de la variation de la vitesse d'écoulement du flux d'air secondaire 22 le long de l'extrados 54 de sorte à limiter au maximum la trainée créée par l'écoulement du flux d'air secondaire 22.

Pour ce faire, d'une part la forme des riblets 6 formés sur la première zone 541 est adaptée pour obtenir un maximum de réduction de trainée pour une vitesse d'écoulement du flux d'air secondaire 22 correspondant à la vitesse moyenne du flux d'air secondaire 22 le long de la première zone 541 ; d'autre part la forme des riblets 6 formés sur la deuxième zone 542 est adaptée pour obtenir un maximum de réduction de trainée pour une vitesse d'écoulement du flux d'air secondaire 22 correspondant à la vitesse moyenne du flux d'air secondaire 22 le long de la deuxième zone 542.

La figure 4 illustre la réduction de trainée obtenue par les riblets 6 le long de l'extrados 54 de l'aube 50, x étant l'abscisse curviligne de l'extrados 54, avec x est égal à 0 au bord d'attaque 51 et x est égal à 1 au bord de fuite 52.

La vitesse d'écoulement du flux d'air secondaire 22 au niveau du bord de fuite 52 étant supérieure à la vitesse d'écoulement dudit flux d'air secondaire 22 au niveau du bord d'attaque 51, la hauteur H2 et l'écartement E2 des riblets 6 formés sur la deuxième zone 542 sont respectivement supérieurs à la hauteur H1 et à l'écartement E1 des riblets 6 formés sur la première zone 541.

Afin d'assurer une meilleure réduction de la trainée le long de tout l'extrados 54, le rapport E1/H1 est égal au rapport E2/H2.

Par ailleurs, de manière préférentielle, la hauteur H2 des riblets 6 formés sur la deuxième zone 542 est égale à deux fois la hauteur H1 des riblets 6 formés sur la première zone 541, et l'écartement E2 des riblets 6 formés sur la deuxième zone 542 est égal à deux fois l'écartement E1 des riblets 6 formés sur la première zone 541. En effet, pour une aube de redresseur 50 d'un redresseur secondaire 5, le ratio optimum entre l'écartement des riblets 6 formés au niveau du bord fuite 52 et l'écartement des riblets 6 formés au niveau du bord d'attaque 51 est un ratio de 2.

Comme illustré sur la figure 3a et la figure 3c, la zone de transition 54t située entre la première zone 541 et la deuxième zone 542 comprend des riblets 6 qui possèdent une hauteur Ht, un écartement Et, et une largeur Lt.

La forme des riblets 6 (la hauteur Ht, l'écartement Et, et la largeur Lt) sur la zone de transition 54t évolue le long de ladite zone de transition 54t de sorte à passer de la hauteur H1, l'écartement E1, et la largeur L1 à une première extrémité de la zone de transition située au niveau de la première zone 541, à la hauteur H2, l'écartement E2, et la largeur L2 à la seconde extrémité de la zone de transition 54t située au niveau de la deuxième zone 542.

Une telle zone de transition 54t entre la première zone 541 et la deuxième zone 542 permet d'éviter un phénomène de sur-frottements en limitant les perturbations dans la couche limite du flux secondaire 22 le long de ladite zone de transition 54t.

Par ailleurs, la zone de transition 54t comprend une portion centrale située entre sa première et sa seconde extrémité sur laquelle les riblets 6 comprennent d'une part une hauteur Ht et une largeur Lt qui sont respectivement égales à la hauteur H1 et la largeur L1 des riblets 6 de la première zone 541, et d'autre part un espacement Et qui est égal à l'espacement E2 des riblets 6 de la deuxième zone 542.

Ainsi, sur la portion centrale de la zone de transition 54t, les riblets 6 voisins sont écartés de sorte qu'il existe un espace Ep entre les bases B desdits riblets 6 voisins. En effet, la largeur Lt des riblets 6 étant inférieure à l'écartement Et, les riblets 6 voisins sont espacés, ou autrement dit ne sont pas en contact. Cet espace Ep permet qu'il y ait une surface plane Sp entre les riblets 6 voisins.

Un tel espace Ep entre les riblets 6 voisins sur la portion centrale de la zone de transition 54t permet de faciliter la fabrication des riblets 6 sur l'extrados 54. En effet, un tel espace Ep permet de faciliter la transition dans la forme des riblets 6 en facilitant par exemple le changement d'outil.

De plus, une telle zone de transition 54t possédant de tels riblets 6 permet de garder un rapport écartement/hauteur qui est identique pour la première zone 541 et la deuxième zone 542.

Le réseau de riblets 6 peut être formé sur n'importe quelle pièce du la turbomachine 1 qui possède une paroi le long de laquelle s'écoule de l'air afin de réduire la trainée de ladite pièce. La pièce peut par exemple former la veine secondaire ou la veine primaire de la turbomachine 1.

Les riblets 6 peuvent être fabriqués selon deux variantes possibles de procédé de fabrication.

Selon une première variante, les riblets 6 sont formés lors du moulage de l'aube 50. Pour ce faire, le moule dans lequel l'aube 50 est moulée comprend une paroi interne nervurée formant une empreinte en négatif des riblets 6 à former sur ladite aube 50.

Afin de former cette empreinte des riblets sur la paroi interne du moule, ladite paroi du moule peut être usinée. L'espace Ep entre les riblets 6 (qui est également présent sur l'empreinte en négatif des riblets 6 sur la paroi interne du moule) permet de faciliter l'usinage de la paroi interne du moule en facilitant le changement d'outil, un premier outil étant utilisé pour former l'empreinte des riblets de la première zone 541 et l'empreinte des riblets 6 de la zone de transition 54t, et un deuxième outil plus grand que le premier outil étant utilisé pour former l'empreinte des riblets 6 de la deuxième zone 542 en s'alignant sur l'empreinte des riblets 6 formées sur la zone de transition 54t. Afin de former l'empreinte des riblets 6 de la zone de transition 54t, le premier outil réalise un balayage transversal à la direction d'avancement dudit premier outil, l'amplitude du balayage changeant le long de la zone de transition afin de faire varier la forme des riblets 6 de la zone de transition 54t.

Selon une deuxième variante, les riblets 6 sont formés en déposant un film nervuré en matériau polymère sur l'aube 50. Les nervures du film qui correspondent aux riblets 6 sont formées par calandrage dudit film. Afin de former les riblets 6 sur le film, un des cylindres utilisés pour le calandrage est nervuré de sorte à comprendre l'empreinte en négatif desdits riblets 6. Les nervures du cylindre peuvent être formées par usinage dudit cylindre. Là encore, de manière similaire, l'espace Ep entre les riblets 6 voisins permet de faciliter l'usinage de l'empreinte des riblets 6 sur le cylindre.

Dans le mode de réalisation présenté, seul l'extrados 54 comprend un réseau de riblets 6 séparé en une première zone 541, une deuxième zone 542, et une zone de transition 54t.

Toutefois, il est possible qu'un réseau de riblets 6 séparé en une première zone, une deuxième zone, et une zone de transition soit formé uniquement sur l'intrados 53 de l'aube 50. Cependant, la formation de riblets 6 sur l'extrados 54 a plus d'impact sur la réduction de trainée que la formation de riblets 6 sur l'intrados 53.

Il est également possible qu'à la fois l'extrados 54 et l'intrados 53 comprennent un réseau de riblets 6 séparé en une première zone, une deuxième zone et une zone de transition.

En outre, dans le mode de réalisation présenté précédemment, la paroi de l'aube 50 sur laquelle les riblets 6 sont formés comprend deux zones sur lesquelles les riblets 6 ont une forme constante et une zone de transition sur laquelle les riblets ont une forme évolutive.

Il est cependant possible d'augmenter le nombre de zones sur lesquelles les riblets 6 ont une forme constante de sorte à adapter au mieux la forme des riblets 6 à la vitesse d'écoulement du flux d'air. Pour ce faire il est seulement nécessaire de disposer une zone de transition sur laquelle la forme des riblets 6 évolue entre chaque zone sur laquelle la forme de riblets 6 est constante. De plus, le rapport écartement/hauteur des riblets 6 formés sur les zones sur lesquelles la forme des riblets est constante doit être égal pour chacune desdites zones sur lesquelles la forme des riblets est constante.

De plus, dans le mode de réalisation présenté précédemment, la pièce sur laquelle les riblets 6 sont formés est une aube de redresseur 50.

Toutefois, il est possible de former des riblets 6 tel que décrits précédemment (au moins deux zones sur lesquelles la forme des riblets 6 est constante, et au moins une zone de transition sur laquelle la forme des riblets 6 évolue de la forme des riblets 6 de la première zone à la forme des riblets 6 de la deuxième zone) sur d'autres pièces de la turbomachine 1 située dans la veine secondaire 12.

Ainsi, il est possible de former des riblets 6 tels que décrit précédemment sur le bec de séparation 4 entre la veine primaire 11 et la veine secondaire 12. Plus précisément, les riblets 6 sont formés sur la face du bec de séparation 4 formant une paroi interne de la veine secondaire 12.

Les riblets 6 illustrés aux figures 3b, 3c et 3d comprennent une section de forme triangulaire. Toutefois, d'autres formes de riblets 6 sont possibles. Les riblets 6 peuvent par exemple être avec une section de forme carré ou trapézoïdale.

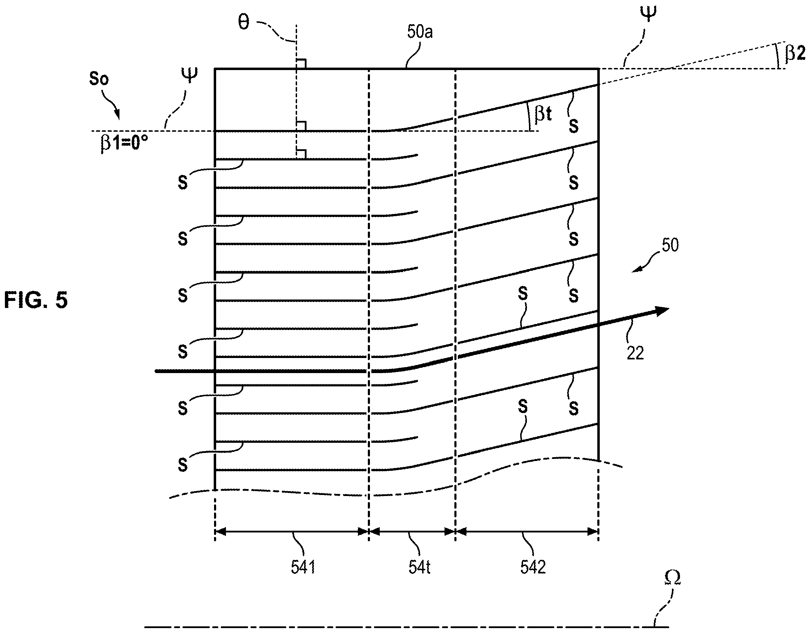

Enfin, comme illustré sur la figure 5, l'inclinaison par rapport au sommet 50a de l'aube 50 des riblets 6 le long de l'extrados 54 et/ou de l'intrados 53 peut varier. Plus précisément, l'inclinaison des riblets 6 sur la première zone 541 et la deuxième zone 542 est différente et constante sur les première et deuxième zones 541, 542. L'inclinaison des riblets 6 évolue le long de la zone de transition 54t entre d'une part l'inclinaison des riblets 6 de la première zone 541 et d'autre part l'inclinaison des riblets 6 de la deuxième zone 542.

Cette variation de l'inclinaison des riblets 6 par rapport au sommet 50a entraine également une variation de l'inclinaison des riblets 6 par rapport à l'axe Ω de la turbomachine 1.

En effet, dans le mode de réalisation présenté aux figures 3a-3d, les riblets 6 sont parallèles au sommet 50a et à l'axe Ω de la turbomachine 1 sur tout le long de l'extrados 54.

Or, dans la variante illustrée à la figure 5, les riblets 6 formés sur la première zone 541 sont inclinés selon un angle d'inclinaison β1 par rapport à un axe Ψ qui est un axe perpendiculaire à l'axe radial θ de l'aube 50. L'axe Ψ est parallèle au sommet 50a et à l'axe Ω.

Les riblets 6 formés sur la deuxième zone 542 sont inclinés selon un angle d'inclinaison β2 par rapport à l'axe Ψ qui est un axe perpendiculaire à l'axe radial θ de l'aube 50. L'angle d'inclinaison β1 est inférieur ou égal à l'angle d'inclinaison β2. L'angle d'inclinaison β1 est constant le long de la première zone 541, et l'angle d'inclinaison β2 est constant le long de la deuxième zone 542. De préférence, lorsque le flux d'air secondaire 22 tend à remonter vers le sommet 50a de l'aube 50 lors de sa circulation le long de ladite aube 50, l'angle d'inclinaison β1 est strictement inférieur à l'angle d'inclinaison β2.

Les riblets formés sur la zone de transition 54t possèdent quant à eux un angle d'inclinaison βt par rapport à l'axe Ψ qui évolue le long de ladite zone de transition 54t. L'angle d'inclinaison βt évolue de l'angle d'inclinaison β1 à la première extrémité de la zone de transition 54t, à l'angle d'inclinaison β2 à la seconde extrémité de la zone de transition 54t.

Cette inclinaison des riblets 6, et cette variation de l'inclinaison dans certaines variantes possibles, permet d'adapter l'orientation des riblets 6 à l'évolution de la direction d'écoulement du flux d'air secondaire 22 le long de l'aube 50, de sorte à optimiser la réduction de la trainée.

En effet, la réduction de la trainée par les riblets 6 est optimale lorsque lesdits riblets 6 sont parallèles à la direction d'écoulement du flux d'air secondaire 22. Or, le flux d'air secondaire 22 peut avoir tendance à remonter vers le sommet 50a de l'aube 50 lors de sa circulation le long de ladite aube 50.

Selon une variante possible, l'angle d'inclinaison β1 des riblets 6 formés sur la première zone 541 est compris entre 0° (comme représenté sur la figure 5) et 15°, et l'angle d'inclinaison β2 des riblets 6 formés sur la deuxième zone 542 est compris entre 0° et 30°.

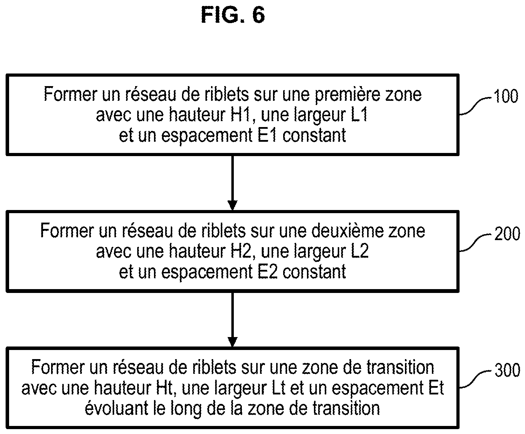

Par ailleurs, comme représenté sur la figure 6, selon une mise en œuvre possible d'un procédé de fabrication d'une pièce pour turbomachine dont la trainée créée par la circulation d'un flux d'air le long d'une paroi de ladite pièce est réduite, ledit procédé comprend les étapes suivantes :
- 100 : former un réseau de riblets 6 sur une première zone 541 de la paroi (par exemple l'extrados 54 d'une aube 50), les riblets 6 comprenant un sommet S, une hauteur H1, une largeur L1, et un écartement E1 qui correspond à la distance entre les sommets S de riblets 6 voisins, la hauteur H1, la largeur L1, et l'écartement E1 des riblets 6 de la première zone 541 étant constants sur toute la première zone 541.
- 200 : former un réseau de riblets 6 sur une deuxième zone 542 de la paroi, les riblets 6 comprenant un sommet S, une hauteur H2, une largeur L2, un écartement E2 correspondant à la distance entre les sommets S de riblets 6 voisins, la hauteur H2, la largeur L2, et l'écartement E2 des riblets 6 de la deuxième zone 542 étant constants sur toute la deuxième zone 542. Le rapport E1/H1 entre l'écartement E1 et la hauteur H1 des riblets 6 de la première zone 541 est égal au rapport E2/H2 entre l'écartement E2 et la hauteur H2 des riblets 6 de la deuxième zone 542 afin d'améliorer la réduction de la trainée.
- 300 : former un réseau de riblets 6 sur une zone de transition 54t située entre la première zone 541 et la deuxième zone 542, les riblets 6 comprenant un sommet S, une hauteur Ht, une largeur Lt, et un écartement Et correspondant à la distance entre les sommets S de riblets 6 voisins, la hauteur Ht, la largeur Lt, et l'écartement Et des riblets 6 de la zone de transition 54t évoluant le long de ladite zone de transition 54t de sorte à passer de la hauteur H1, la largeur L1, et l'écartement E1 des riblets 6 de la première zone 541 à une première extrémité de la zone de transition 54t, à la hauteur H2, la largeur L2, et l'écartement E2 des riblets 6 de la deuxième zone 542 à une deuxième extrémité de la zone de transition 54t. La zone de transition 54t comprend une portion centrale située entre la première et la seconde extrémité sur laquelle les riblets 6 comprennent d'une part la hauteur Ht et la largeur Lt qui sont respectivement égales à la hauteur H1 et la largeur L1 des riblets 6 de la première zone 541, et d'autre part un écartement Et égal à l'écartement E2 des riblets 6 de la deuxième zone 542.

Ces trois étapes de formation de riblets 100, 200 et 300 peuvent être réalisées dans n'importe quel ordre. Cependant, de préférence, l'étape 300 de formation des riblets 6 sur la zone de transition 54t est effectuée en deuxième, c'est-à-dire après l'étape 100 de formation des riblets 6 sur la première zone 541, ou bien après l'étape 200 de formation des riblets 6 sur la deuxième zone 542. Il est ainsi par exemple possible de former les riblets 6 sur la première zone 541, puis sur la zone de transition 54t, puis sur la deuxième zone 542. Un autre exemple possible consiste à former les riblets 6 sur la deuxième zone 542, puis sur la zone de transition 54t, puis sur la première zone 541.

De plus, comme décrit précédemment, ces trois étapes de formation de riblets 100, 200 et 300 peuvent être réalisées simultanément en déposant un film en matériau polymère nervuré sur la pièce, ou bien en moulant la pièce dans un moule comprenant une surface interne nervurée.

## Revendications

1. Pièce d'une turbomachine (1) pour un aéronef comprenant une paroi qui comprend une première zone (541), une deuxième zone (542), et une zone de transition (54t) située entre la première zone (541) et la deuxième zone (542),
un réseau de riblets (6) étant formé sur la première zone (541), sur la deuxième zone (542), et ainsi que sur la zone de transition (54t), les riblets étant orientés parallèlement à une direction principale d'un écoulement d'air le long de la paroi;
les riblets (6) comprenant un sommet (S), une hauteur (H1, H2, Ht), une largeur (L1, L2, Lt), et un écartement (E1, E2, Et) qui correspond à la distance entre les sommets (S) de riblets (6) voisins ;
la hauteur (H1), la largeur (L1), et l'écartement (E1) des riblets (6) de la première zone (541) étant constants sur la première zone (541) ;
la hauteur (H2), la largeur (L2), et l'écartement (E2) des riblets (6) de la deuxième zone (542) étant constants sur la deuxième zone (542) ;
la hauteur (Ht), la largeur (Lt), et l'écartement (Et) des riblets (6) de la zone de transition (54t) évoluant le long de ladite zone de transition (54t) de sorte à passer de la hauteur (H1), la largeur (L1), et l'écartement (E1) des riblets (6) formés sur la première zone (541) à une première extrémité de la zone de transition (54t), à la hauteur (H2), la largeur (L2), et l'écartement (E2) des riblets (6) formés sur la deuxième zone (542) à une deuxième extrémité de la zone de transition (54t) ;
**caractérisé en ce que** la zone de transition (54t) comprend une portion centrale située entre la première et la seconde extrémité sur laquelle les riblets (6) comprennent d'une part la hauteur (Ht) et la largeur (Lt) qui sont respectivement égales à la hauteur (H1) et la largeur (L1) des riblets (6) de la première zone (541), et d'autre part un écartement (Et) égal à l'écartement (E2) des riblets (6) de la deuxième zone (542).

2. Pièce selon la revendication 1, dans laquelle le rapport (E1/H1) entre l'écartement (E1) et la hauteur (H1) des riblets (6) de la première zone (541) étant égal au rapport (E2/H2) entre l'écartement (E2) et la hauteur (H2) des riblets (6) de la deuxième zone (542).

3. Pièce selon la revendication 1 ou 2, dans laquelle la pièce est une aube (50) de turbomachine pour aéronef, l'aube (50) comprenant un intrados (53) et un extrados (54), le réseau de riblets (6) étant situé sur l'intrados (53) et/ou l'extrados (54) de ladite aube (50).

4. Pièce selon la revendication 3, dans laquelle l'aube (50) comprend un bord d'attaque (51) et un bord de fuite (52), la première zone (541) s'étendant à partir du bord d'attaque (51) et la deuxième zone (542) s'étendant à partir du bord de fuite (52), la hauteur (H2), la largeur (L2) et l'écartement (E2) des riblets (6) de la deuxième zone (542) étant respectivement supérieurs à la hauteur (H1), la largeur (L1) et l'écartement (E1) des riblets (6) de la première zone (541).

5. Pièce selon la revendication 4, dans laquelle l'aube (50) comprend un axe radial (θ) et un axe (Ψ) perpendiculaire à l'axe radial (θ), les riblets (6) formés sur la première zone (541) possédant un angle d'inclinaison (β1) par rapport à l'axe (Ψ) qui est constant sur la première zone (541), les riblets (6) formés sur la deuxième zone (542) possédant un angle d'inclinaison (β2) par rapport à l'axe (Ψ) qui est supérieur ou égal à l'angle d'inclinaison (β1) des riblets (6) de la première zone (541) et qui est constant sur la deuxième zone (542), les riblets (6) formés sur la zone de transition (54t) possédant un angle d'inclinaison (βt) par rapport à l'axe (Ψ) qui évolue le long de ladite zone de transition (54t) entre l'angle d'inclinaison (β1) des riblets (6) de la première zone (541) à la première extrémité de la zone de transition (54t), et l'angle d'inclinaison (β2) des riblets (6) de la deuxième zone (542) à la deuxième extrémité de la zone de transition (54t).

6. Pièce selon la revendication 5, dans laquelle l'angle d'inclinaison (β1) des riblets (6) de la première zone (541) est compris entre 0° et 15°, et dans lequel l'angle d'inclinaison (β2) des riblets (6) de la deuxième zone (542) est compris entre 0° et 30°.

7. Pièce selon l'une quelconque des revendications 3 à 6, dans laquelle ladite pièce est une aube de redresseur pour un redresseur secondaire (5) d'une turbomachine (1) pour un aéronef.

8. Turbomachine (1) pour aéronef comprenant une pièce selon l'une quelconque des revendications 1 à 7.

9. Turbomachine (1) pour aéronef selon la revendication 8, dans laquelle la turbomachine (1) comprend une veine primaire (11), une veine secondaire (12), une soufflante (3), et un redresseur secondaire (5) situé dans la veine secondaire (12), un bec de séparation (4) entre la veine primaire (11) et la veine secondaire (12) qui est situé entre la soufflante (3) et le redresseur secondaire (5), le bec de séparation (4) formant une pièce conforme à la revendication 1 ou 2, les riblets (6) étant situés sur une portion du bec de séparation (4) formant une paroi interne de la veine secondaire (12).

10. Procédé de fabrication d'une pièce de turbomachine (1) selon l'une quelconque des revendications 1 à 7 ledit procédé comprenant les étapes suivantes :
- (100) former un réseau de riblets (6) sur une première zone (541) d'une paroi de la pièce, les riblets (6) comprenant un sommet (S), une hauteur (H1), une largeur (L1), et un écartement (E1) qui correspond à la distance entre les sommets (S) de riblets (6) voisins, la hauteur (H1), la largeur (L1), et l'écartement (E1) des riblets (6) de la première zone (541) étant constants sur toute la première zone (541) ;
- (200) former un réseau de riblets (6) sur une deuxième zone (542) de la paroi, les riblets (6) comprenant un sommet (S), une hauteur (H2), une largeur (L2), un écartement (E2) correspondant à la distance entre les sommets (S) de riblets (6) voisins, la hauteur (H2), la largeur (L2), et l'écartement (E2) des riblets (6) de la deuxième zone (542) étant constants sur toute la deuxième zone (542) ;
- (300) former un réseau de riblets (6) sur une zone de transition (54t) de la paroi située entre la première zone (541) et la deuxième zone (542), les riblets (6) comprenant un sommet (S), une hauteur (Ht), une largeur (Lt), et un écartement (Et) correspondant à la distance entre les sommets (S) de riblets (6) voisins, la hauteur (Ht), la largeur (Lt), et l'écartement (Et) des riblets (6) de la zone de transition (54t) évoluant le long de ladite zone de transition (54t) de sorte à passer de la hauteur (H1), la largeur (L1), et l'écartement (E1) des riblets (6) de la première zone (541) à une première extrémité de la zone de transition (54t), à la hauteur (H2), la largeur (L2), et l'écartement (E2) des riblets (6) de la deuxième zone (542) à une deuxième extrémité de la zone de transition (54t), **caractérisé en ce que** la zone de transition (54t) comprend une portion centrale située entre la première et la seconde extrémité sur laquelle les riblets (6) comprennent d'une part la hauteur (Ht) et la largeur (Lt) qui sont respectivement égales à la hauteur (H1) et la largeur (L1) des riblets (6) de la première zone (541), et d'autre part un écartement (Et) égal à l'écartement (E2) des riblets (6) de la deuxième zone (542).

11. Procédé selon la revendication 10 dans lequel le rapport (E1/H1) entre l'écartement (E1) et la hauteur (H1) des riblets (6) de la première zone (541) est égal au rapport (E2/H2) entre l'écartement (E2) et la hauteur (H2) des riblets (6) de la deuxième zone (542).

## Patentansprüche

1. Teil einer Turbomaschine (1) für ein Luftfahrzeug, umfassend eine Wand, die eine erste Zone (541), eine zweite Zone (542) und eine Übergangszone (54t) umfasst, die sich zwischen der ersten Zone (541) und der zweiten Zone (542) befindet,
wobei ein Netzwerk von Riblets (6) auf der ersten Zone (541), auf der zweiten Zone (542) und sowie auf der Übergangszone (54t) gebildet ist, wobei die Riblets parallel zu einer Hauptrichtung einer Luftströmung entlang der Wand ausgerichtet sind;
wobei die Riblets (6) eine Spitze (S), eine Höhe (H1, H2, Ht), eine Breite (L1, L2, Lt) und eine Beabstandung (E1, E2, Et) umfassen, die dem Abstand zwischen den Spitzen (S) benachbarter Riblets (6) entspricht;
wobei die Höhe (H1), die Breite (L1) und die Beabstandung (E1) der Riblets (6) der ersten Zone (541) über die erste Zone (541) konstant sind;
wobei die Höhe (H2), die Breite (L2) und die Beabstandung (E2) der Riblets (6) der zweiten Zone (542) über die zweite Zone (542) konstant sind;
wobei sich die Höhe (Ht), die Breite (Lt) und die Beabstandung (Et) der Riblets (6) der Übergangszone (54t) entlang der Übergangszone (54t) derart entwickeln, dass sie von der Höhe (H1), der Breite (L1) und der Beabstandung (E1) der auf der ersten Zone (541) an einem ersten Ende der Übergangszone (54t) gebildeten Riblets (6) zu der Höhe (H2), der Breite (L2) und der Beabstandung (E2) der auf der zweiten Zone (542) an einem zweiten Ende der Übergangszone (54t) gebildeten Riblets (6) wechseln;
**dadurch gekennzeichnet, dass** die Übergangszone (54t) einen zentralen Abschnitt umfasst, der sich zwischen dem ersten und dem zweiten Ende befindet, auf dem die Riblets (6) zum einen die Höhe (Ht) und die Breite (Lt) umfassen, die jeweils gleich der Höhe (H1) und der Breite (L1) der Riblets (6) der ersten Zone (541) sind, und zum anderen eine Beabstandung (Et), die gleich der Beabstandung (E2) der Riblets (6) der zweiten Zone (542) ist.

2. Teil nach Anspruch 1, wobei das Verhältnis (E1/H1) zwischen der Beabstandung (E1) und der Höhe (H1) der Riblets (6) der ersten Zone (541) gleich dem Verhältnis (E2/H2) zwischen der Beabstandung (E2) und der Höhe (H2) der Riblets (6) der zweiten Zone (542) ist.

3. Teil nach Anspruch 1 oder 2, wobei das Teil eine Schaufel (50) einer Turbomaschine für ein Luftfahrzeug ist, wobei die Schaufel (50) eine Unterseite (53) und eine Oberseite (54) umfasst, wobei sich das Netzwerk der Riblets (6) auf der Unterseite (53) und/oder der Oberseite (54) der Schaufel (50) befindet.

4. Teil nach Anspruch 3, wobei die Schaufel (50) eine Vorderkante (51) und eine Hinterkante (52) umfasst, wobei sich die erste Zone (541) ab der Vorderkante (51) erstreckt und sich die zweite Zone (542) ab der Hinterkante (52) erstreckt, wobei die Höhe (H2), die Breite (L2) und die Beabstandung (E2) der Riblets (6) der zweiten Zone (542) jeweils größer als die Höhe (H1), die Breite (L1) und die Beabstandung (E1) der Riblets (6) der ersten Zone (541) sind.

5. Teil nach Anspruch 4, wobei die Schaufel (50) eine radiale Achse (Θ) und eine Achse (Ψ), die senkrecht zu der radialen Achse (Θ) ist, umfasst, wobei die auf der ersten Zone (541) gebildeten Riblets (6) einen Neigungswinkel (β1) in Bezug auf die Achse (Ψ) besitzen, der auf der ersten Zone (541) konstant ist, wobei die auf der zweiten Zone (542) gebildeten Riblets (6) einen Neigungswinkel (β2) in Bezug auf die Achse (Ψ) besitzen, der größer oder gleich dem Neigungswinkel (β1) der Riblets (6) der ersten Zone (541) ist und der auf der zweiten Zone (542) konstant ist, wobei die auf der Übergangszone (54t) gebildeten Riblets (6) einen Neigungswinkel (βt) in Bezug auf die Achse (Ψ) besitzen, der sich entlang der Übergangszone (54t) zwischen dem Neigungswinkel (β1) der Riblets (6) der ersten Zone (541) am ersten Ende der Übergangszone (54t) und dem Neigungswinkel (β2) der Riblets (6) der zweiten Zone (542) am zweiten Ende der Übergangszone (54t) entwickelt.

6. Teil nach Anspruch 5, wobei der Neigungswinkel (β1) der Riblets (6) der ersten Zone (541) zwischen 0° und 15° liegt und wobei der Neigungswinkel (β2) der Riblets (6) der zweiten Zone (542) zwischen 0° und 30° liegt.

7. Teil nach einem der Ansprüche 3 bis 6, wobei das Teil eine Gleichrichterschaufel für einen sekundären Gleichrichter (5) einer Turbomaschine (1) für ein Luftfahrzeug ist.

8. Turbomaschine (1) für Luftfahrzeug, umfassend ein Teil nach einem der Ansprüche 1 bis 7.

9. Turbomaschine (1) für Luftfahrzeug nach Anspruch 8, wobei die Turbomaschine (1) einen primären Kanal (11), einen sekundären Kanal (12), ein Gebläse (3) und einen sekundären Gleichrichter (5), der sich in dem sekundären Kanal (12) befindet, umfasst, eine Trennklappe (4) zwischen dem primären Kanal (11) und dem sekundären Kanal (12), die sich zwischen dem Gebläse (3) und dem sekundären Gleichrichter (5) befindet, wobei die Trennklappe (4) ein Teil nach Anspruch 1 oder 2 bildet, wobei sich die Riblets (6) auf einem Abschnitt der Trennklappe (4) befinden, die eine innere Wand des sekundären Kanals (12) bildet.

10. Verfahren zur Herstellung eines Teils einer Turbomaschine (1) nach einem der Ansprüche 1 bis 7, wobei das Verfahren die folgenden Schritte umfasst:
- (100) Bilden eines Netzwerks von Riblets (6) auf einer ersten Zone (541) einer Wand des Teils, wobei die Riblets (6) eine Spitze (S), eine Höhe (H1), eine Breite (L1), eine Beabstandung (E1) umfassen, die dem Abstand zwischen den Spitzen (S) benachbarter Riblets (6) entspricht, wobei die Höhe (H1), die Breite (L1) und die Beabstandung (E1) der Riblets (6) der ersten Zone (541) über die gesamte erste Zone (541) konstant sind;
- (200) Bilden eines Netzwerks von Riblets (6) auf einer zweiten Zone (542) der Wand, wobei die Riblets (6) eine Spitze (S), eine Höhe (H2), eine Breite (L2), eine Beabstandung (E2) umfassen, die dem Abstand zwischen den Spitzen (S) benachbarter Riblets (6) entspricht, wobei die Höhe (H2), die Breite (L2) und die Beabstandung (E2) der Riblets (6) der zweiten Zone (542) über die gesamte zweite Zone (542) konstant sind;
- (300) Bilden eines Netzwerks von Riblets (6) auf einer Übergangszone (54t) der Wand, die sich zwischen der ersten Zone (541) und der zweiten Zone (542) befindet, wobei die Riblets (6) eine Spitze (S), eine Höhe (Ht), eine Breite (Lt) und eine Beabstandung (Et) umfassen, die dem Abstand zwischen den Spitzen (S) benachbarter Riblets (6) entspricht, wobei sich die Höhe (Ht), die Breite (Lt) und die Beabstandung (Et) der Riblets (6) der Übergangszone (54t) entlang der Übergangszone (54t) derart entwickeln, dass sie von der Höhe (H1), der Breite (L1) und der Beabstandung (E1) der Riblets (6) der ersten Zone (541) an einem ersten Ende der Übergangszone (54t) zu der Höhe (H2), der Breite (L2) und der Beabstandung (E2) der Riblets (6) der zweiten Zone (542) an einem zweiten Ende der Übergangszone (54t) wechseln, **dadurch gekennzeichnet, dass** die Übergangszone (54t) einen zentralen Abschnitt umfasst, der sich zwischen dem ersten und dem zweiten Ende befindet, auf dem die Riblets (6) zum einen die Höhe (Ht) und die Breite (Lt) umfassen, die jeweils gleich der Höhe (H1) und der Breite (L1) der Riblets (6) der ersten Zone (541) sind, und zum anderen eine Beabstandung (Et), die gleich der Beabstandung (E2) der Riblets (6) der zweiten Zone (542) ist.

11. Verfahren nach Anspruch 10, wobei das Verhältnis (E1/H1) zwischen der Beabstandung (E1) und der Höhe (H1) der Riblets (6) der ersten Zone (541) gleich dem Verhältnis (E2/H2) zwischen der Beabstandung (E2) und der Höhe (H2) der Riblets (6) der zweiten Zone (542) ist.

## Claims

1. A turbomachine part (1) for an aircraft comprising a wall which comprises a first zone (541), a second zone (542), and a transition zone (54t) located between the first zone (541) and the second zone (542),
an array of riblets (6) being formed on the first zone (541), on the second zone (542), and also on the transition zone (54t), the riblets being oriented parallel to a principal direction of airflow flowing along the wall;
the riblets (6) comprising an apex (S), a height (H1, H2, Ht), a width (L1, L2, Lt), and a spacing (E1, E2, Et) which corresponds to the distance between the apices (S) of adjacent riblets (6);
the height (H1), the width (L1), and the spacing (E1) of the riblets (6) of the first zone (541) being constant on the first zone (541);
the height (H2), the width (L2), and the spacing (E2) of the riblets (6) of the second zone (542) being constant on the second zone (542);
the height (Ht), the width (Lt), and the spacing (Et) of the riblets (6) of the transition zone (54t) evolving along said transition zone (54t) so as to move from the height (H1), the width (L1), and the spacing (E1) of the riblets (6) formed on the first zone (541) at a first end of the transition zone (54t), to the height (H2), the width (L2), and the spacing (E2) of the riblets (6) formed on the second zone (542) at a second end of the transition zone (54t);
**characterized in that** the transition zone (54t) comprises a central portion located between the first and the second end on which the riblets (6) comprise both the height (Ht) and the width (Lt) which are respectively equal to the height (H1) and the width (L1) of the riblets (6) of the first zone (541), and also a spacing (Et) equal to the spacing (E2) of the riblets (6) of the second zone (542).

2. The part according to claim 1, wherein the ratio (E1/H1) between the spacing (E1) and the height (H1) of the riblets (6) of the first zone (541) being equal to the ratio (E2/H2) between the spacing (E2) and the height (H2) of the riblets (6) of the second zone (542).

3. The part according to claim 1 or 2, wherein the part is a blade (50) of a turbomachine for aircraft, the blade (50) comprising an intrados (53) and an extrados (54), the array of riblets (6) being located on the intrados (53) and/or the extrados (54) of said blade (50).

4. The part according to claim 3, wherein the blade (50) comprises a leading edge (51) and a trailing edge (52), the first zone (541) extending from the leading edge (51) and the second zone (542) extending from the trailing edge (52), the height (H2), the width (L2) and the spacing (E2) of the riblets (6) of the second zone (542) being respectively greater than the height (H1), the width (L1) and the spacing (E1) of the riblets (6) of the first zone (541).

5. The part according to claim 4, wherein the blade (50) comprises a radial axis (θ) and an axis (Ψ) perpendicular to the radial axis (θ), the riblets (6) formed on the first zone (541) having an angle of inclination (β1) relative to the axis (Ψ) which is constant on the first zone (541), the riblets (6) formed on the second zone (542) having an angle of inclination (β2) relative to the axis (Ψ) which is greater than or equal to the angle of inclination (β1) of the riblets (6) of the first zone (541) and which is constant on the second zone (542), the riblets (6) formed on the transition zone (54t) having an angle of inclination (βt) relative to the axis (Ψ) which evolves along said transition zone (54t) between the angle of inclination (β1) of the riblets (6) of the first zone (541) at the first end of the transition zone (54t), and the angle of inclination (β2) of the riblets (6) of the second zone (542) at the second end of the transition zone (54t).

6. The part according to claim 5, wherein the angle of inclination (β1) of the riblets (6) of the first zone (541) is between 0° and 15°, and wherein the angle of inclination (β2) of the riblets (6) of the second zone (542) is between 0° and 30°.

7. The part according to any one of claims 3 to 6, wherein said part is a rectifier blade for a secondary rectifier (5) of a turbomachine (1) for an aircraft.

8. A turbomachine (1) for aircraft comprising a part according to any one of claims 1 to 7.

9. Turbomachine (1) for aircraft according to claim 8, wherein the turbomachine (1) comprises a primary vein (11), a secondary vein (12), a fan (3), and a secondary rectifier (5) located in the secondary vein (12), a separating spout (4) between the primary vein (11) and the secondary vein (12) which is located between the fan (3) and the secondary rectifier (5), the separating spout (4) forming a part according to claim 1 or 2, the riblets (6) being located on a portion of the separating spout (4) forming an internal wall of the secondary vein (12).

10. A manufacturing method of a turbomachine part according to any of the claims 1 to 7, said method comprising the following steps:
- (100) forming an array of riblets (6) on a first zone (541) of a wall of the part, the riblets (6) comprising an apex (S), a height (H1), a width (L1), and a spacing (E1) which corresponds to the distance between the apices (S) of adjacent riblets (6), the height (H1), the width (L1), and the spacing (E1) of the riblets (6) of the first zone (541) being constant on the entire first zone (541);
- (200) forming an array of riblets (6) on a second zone (542) of the wall, the riblets (6) comprising an apex (S), a height (H2), a width (L2), a spacing (E2) corresponding to the distance between the apices (S) of adjacent riblets (6), the height (H2), the width (L2), and the spacing (E2) of the riblets (6) of the second zone (542) being constant on the entire second zone (542);
- (300) forming an array of riblets (6) on a transition zone (54t) of the wall located between the first zone (541) and the second zone (542), the riblets (6) comprising an apex (S), a height (Ht), a width (Lt), and a spacing (Et) corresponding to the distance between the apices (S) of adjacent riblets (6), the height (Ht), the width (Lt), and the spacing (Et) of the riblets (6) of the transition zone (54t) evolving along said transition zone (54t) so as to move from the height (H1), the width (L1), and the spacing (E1) of the riblets (6) of the first zone (541) at a first end of the transition zone (54t), to the height (H2), the width (L2), and the spacing (E2) of the riblets (6) of the second zone (542) at a second end of the transition zone (54t),
**characterized in that** the transition zone (54t) comprises a central portion located between the first and the second end on which the riblets (6) comprise both the height (Ht) and the width (Lt) which are respectively equal to the height (H1) and the width (L1) of the riblets (6) of the first zone (541), and also a spacing (Et) equal to the spacing (E2) of the riblets (6) of the second zone (542).

11. The method according to claim 10 wherein the ratio (E1/H1) between the spacing (E1) and the height (H1) of the riblets (6) of the first zone (541) is equal to the ratio (E2/H2) between the spacing (E2) and the height (H2) of the riblets (6) of the second zone (542).
